# EUROPEAN PATENT APPLICATION

(11) **EP 2 687 991 A2**
(43) Date of publication of application: **22.01.2014**
(21) Application number: 13172962.6
(22) Date of filing: 20.06.2013
(51) Int. Cl.: G06F 12/08

(54) **Methods And Structure For Improved Flexibility In Shared Storage Caching By Multiple Systems Operating As Multiple Virtual Machines**

(30) Priority: 19.07.2012 US 201261673378 P; 12.12.2012 US 201213712677
(71) Applicant: LSI Corporation, San Jose, CA 95131 (US)
(72) Inventor: Bert, Luca, Norcross, GA Georgia 30093 (US); Maharana, Parag R., San Jose, CA California 95131 (US)
(74) Representative: Williams, David John

(57) **Abstract**

Methods and structure for improved exibility in managing cache memory in a storage controller (106) of a computing device (104) on which multiple virtual machines (VMs) (110) are operating in a VM computing environment (100). Embodiments hereof provide for the storage controller to receive configuration information from a VM management system (102) coupled with the storage controller where the configuration information comprises information regarding each VM presently operating on the computing device. Based on the configuration information, the storage controller allocates and de-allocates segments (208, 210, 212) of the cache memory of the storage controller for use by the various virtual machines presently operating on the computing device. The configuration information may comprise indicia of the number of VMs presently operating as well as performance metric threshold configuration information to allocate/de-allocate segments based on present performance of each virtual machine.

## Description

This patent application claims priority to United States Provisional Patent Application Serial Number 61/673,378 filed 19 July 2012.

### BACKGROUND

### 1. Field of the Invention

The invention relates generally to systems utilizing cache memory and more specifically relates to improved flexibility for storage caching in multiple systems operating in a virtual machine computing environment.

### 2. Related Patents

This patent is related to commonly owned United States patent number 13/197,009 entitled METHOD TO ALLOW STORAGE CACHE ACCELERATION WHEN THE SLOW TIER IS ON INDEPENDENT CONTROLLER filed 3 August 2011 which is hereby incorporated by reference.

### 3. Discussion of Related Art

A variety of computing applications provide multiple services to a large enterprise of network attached client systems. For example, computing services in a large enterprise may include print services, file/storage services, domain/security services, web services, etc. Each of these services may reside on one or more server computing devices. To enhance flexibility and reliability in providing such computing services, many system administrators prefer to use a virtual system to provide each of these services (or to provide various combinations of services) each executing on one or more virtual machines. A virtual machine is provided by an abstraction layer of software operating on a computing device that hides the underlying computing hardware from the software system that provides a desired service. A supervisory program (e.g., a "hypervisor" or "virtual machine monitor") then translates operations of a virtual machine into corresponding access to features of a real, physical computing device and its associated I/O and storage devices.

VMware® is a common, commercially available system that provides for such a hypervisor and related management tools to manage virtual machines on a computing device. The management tools aid in creating and destroying virtual machines operating on a computing device and migrating virtual machines among various computing devices.

One important advantage of such a virtual computing environment is the ability to move/migrate a virtual machine (providing a desired computing service) among various physical computing devices. For example, if an administrator needs to disable a particular physical computing device to service that device, the virtual machines operating on that computing device may be moved or migrated to another physical computing device to permit administrative service to the first physical computing device. The VMware® family of products provide a feature/function called vMotion™ (also referred to as "live migration") to improve the flexibility of migrating virtual machines among physical computing devices. VMware® vMotion™ enables the live migration of running virtual machines from one physical server (computing devices) to another with zero downtime, continuous service availability, and complete transaction integrity. vMotion™ is a key enabling technology for creating the dynamic, automated, and self-optimizing datacenter.

Some systems utilize such a virtualized environment to provide multiple virtual machines - each providing a different computational service in the context of storage system management. For example, a cluster of networked client programs (such as in a call center of a vendor) may be implemented as virtual machines on one or more physical computing devices. Each call center representative operates a client program on a virtual machine that may be physically migrated (by the hypervisor) to any suitable physical computing system. The client programs utilize the computational resources of the underlying computing device including its I/O devices and storage subsystems. Some storage subsystems include advanced caching capabilities to allow for improved performance. Data to be stored on persistent mass storage devices by operation of a virtual machine may be stored in various tiers of persistent storage having varying performance characteristics to improve overall performance of the storage subsystem. For example, LSI Corporation provides a product known as Nytro™ MegaRAID® - a RAID storage controller that provides flash memory components as a higher speed tier of storage as compared to typical disk drives that may controlled by the storage controller. Thus, such a storage controller may provide various tiers of varying performance storage capacity and may determine dynamically which stored data should be moved between the various tiers transparently with respect to the system/systems that are accessing to the stored data.

In the context of storage subsystems utilized in a virtual machine environment, it is common for multiple virtual machines (each providing related client services) to require shared access to stored data. In the context of VMware®, vStorage Virtual Machine File System (VMFS) is a high-performance cluster file system that provides storage virtualization optimized for virtual machines. Each virtual machine is encapsulated in a small set of files and VMFS is the default storage system for these files on physical SCSI disks and partitions. Using VMFS for shared storage operations among multiple virtual machines presents a number of challenges. Chief among these challenges is that VMFS adds significant overhead processing thus reducing the performance advantages of advanced storage controllers that may store data in various tiered levels of cached storage to improve performance. Further, creation, deletion, and migration of virtual machines that share access to stored data on a computing system gives rise to further problems in fairly allocating the varying tiers of performance of storage among the virtual machines. Further, performance characteristics of the various virtual machines may rapidly change such that the performance improvements of an advanced caching storage controller may not be able to quickly adapt to the changing performance profiles of multiple virtual machines.

Thus, a number of challenges remain relating to allocation and de-allocation of a storage capacity in a tiered caching storage subsystem in the context of a virtualized system of multiple virtual machines sharing access to the stored data - especially in the context of a VMware® computing environment.

### SUMMARY

The present invention solves the above and other problems, thereby advancing the state of the useful arts, by providing methods and structure for improved flexibility in managing cache memory in a storage controller of a computing device on which multiple virtual machines (VMs) are operating in a VM computing environment. Embodiments hereof provide for the storage controller to receive configuration information from a VM management system coupled with the storage controller where the configuration information comprises information regarding each VM presently operating on the computing device. Based on the configuration information, the storage controller allocates and de-allocates segments of the cache memory of the storage controller for use by the various virtual machines presently operating on the computing device. The configuration information may comprise indicia of the number of VMs presently operating as well as performance metric threshold configuration information to allocate/de-allocate segments based on present performance of each virtual machine.

In one aspect hereof, an enhanced storage controller is provided to couple with a computing device operating in a virtual machine (VM) computing environment. The VM computing environment provides for operation of multiple VMs on the computing device and comprises a VM management system (VMMS) coupled with the computing device. The storage controller comprises a cache memory accessible to any of the VMs. The cache memory is logically subdivided into a plurality of segments. The storage controller further comprises cache control logic coupled with the cache memory and communicatively coupled with the VMMS to receive configuration information from the VMMS. The configuration information comprises configuration information regarding each VM presently operating on the computing device. The cache control logic is adapted to controllably allocate and de-allocate a portion of the plurality of segments for use by each virtual machine presently operating on the computing device based on the configuration information received from the VMMS wherein each portion comprises a number of segments based on the configuration information.

Another aspect hereof provides for a system comprising a plurality of computing devices each further comprising an enhanced storage controller (as above) and a virtual machine management system communicatively coupled with each of the storage controllers.

Yet another aspect hereof provides a method operable in an enhanced storage controller that is adapted to communicatively couple with each of one or more virtual machines (VMs) operating on a computing device in a VM computing environment. The method comprises logically dividing a cache memory of the storage controller into a plurality of segments and allocating a portion of the plurality of segments for each of the VMs initially operating on the computing device. Each portion comprises a number of segments determined based on a number of VMs initially operating on the computing device. The method further comprises receiving configuration information from the VMMS. The configuration information comprises changes in the number of VMs presently operating on the computing device. The method then adjusts the number of segments allocated in the portion associated with one or more VMs in response to receiving the configuration information.

### BRIEF DESCRIPTION OF THE DRAWINGS

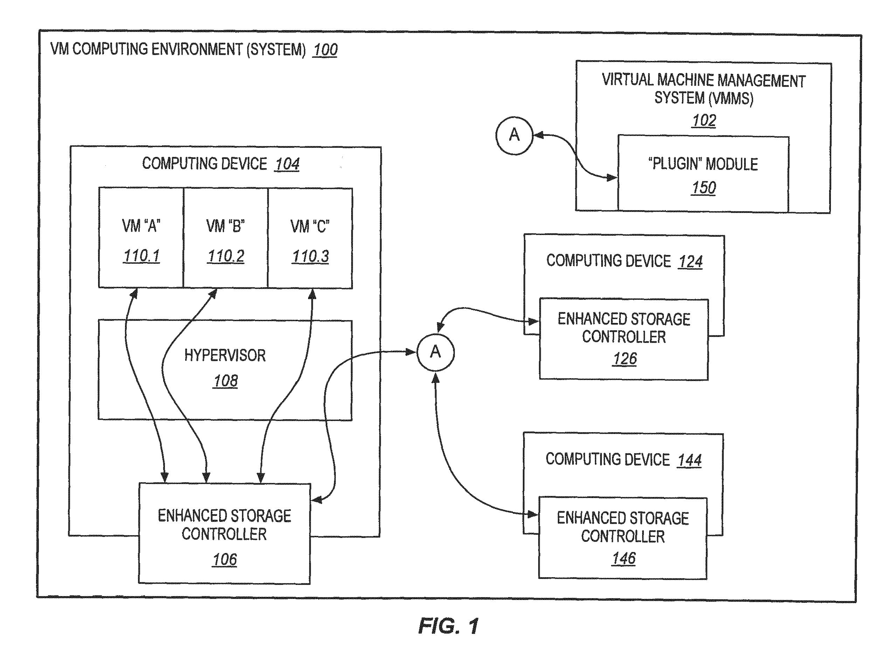

FIG. 1 is a block diagram of an exemplary virtual machine computing system incorporating a plurality of storage controllers enhanced in accordance with features and aspects hereof to provide rapid, dynamic allocation and de-allocation of cache memory for virtual machines operating on corresponding computing devices.

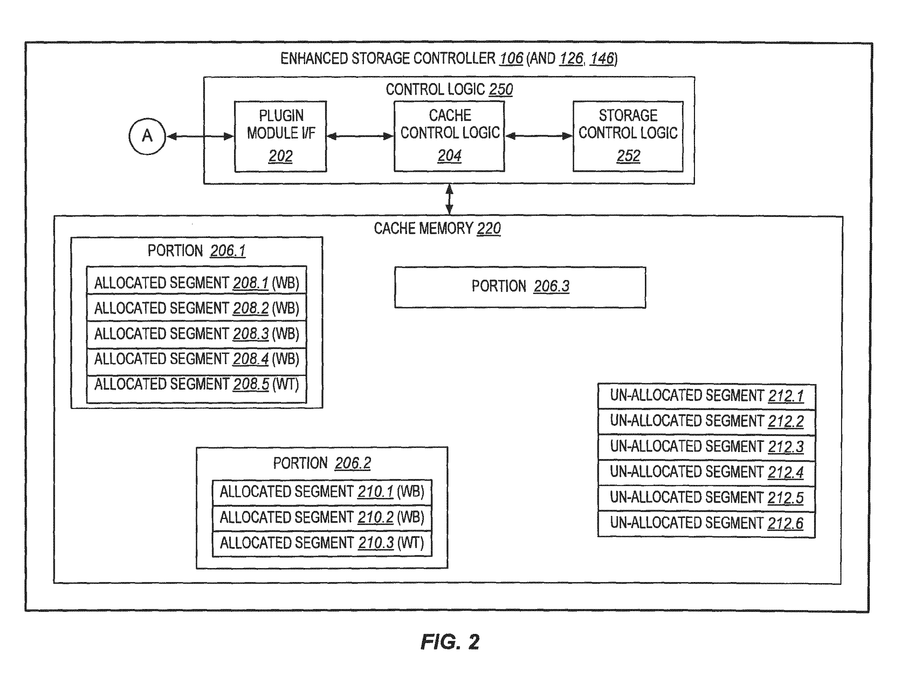

FIG. 2 is a flowchart describing exemplary additional details of an enhanced storage controller of FIG. 1

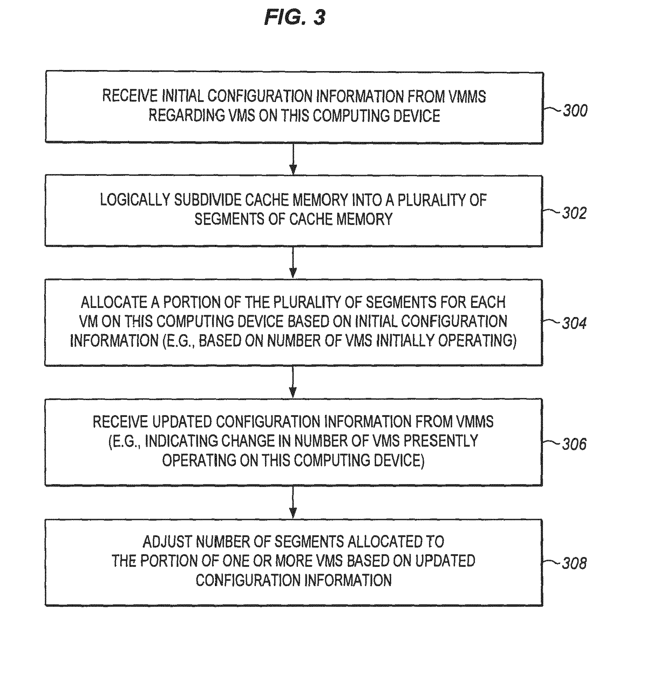

FIGS. 3 through 8 are flowcharts describing exemplary methods of operation of enhanced storage controllers of FIGS. 1 and 2 to provide rapid, dynamic allocation and de-allocation of cache memory for virtual machines operating on corresponding computing devices in accordance with features and aspects hereof.

### DETAILED DESCRIPTION OF THE DRAWINGS

FIG. 1 is a block diagram of a virtual machine computing environment (system 100) comprising a plurality of computing devices (104, 124, and 144) communicatively coupled with virtual machine management system (VMMS) 102. Each computing device 104, 124, and 144 may comprise any suitable computing system or components capable of operating in a virtual machine computing environment such as a personal computer, server, or other similar computing device. Virtual machine management system 102 similarly comprises any suitable computing device on which a virtual machine management program is operable to configure and control parameters of the virtual machine environment as a whole as well as the virtual machines operable in each of computing devices 104, 124, and 144. Virtual machine management system 102 communicates with components of each computing device 104, 124, and 144 (indicated as lines connecting label "A") via any standard communication medium and protocol including, for example, network protocols such as TCP/IP. In some embodiments, VMMS 102 may be a program operating within one of computing devices 104, 124, or 144.

In accordance with features and aspects hereof, each computing device 104, 124, and 144, comprises a corresponding enhanced storage controller 106, 126, and 146, respectively. Each storage controller is communicatively coupled with VMMS 102 (as indicated by connector label "A"). Each storage controller may comprise any suitable peripheral interface device adapted for communicatively coupling the corresponding computing device and adapted for management and control of storage devices (not shown) coupled with each storage controller. In some exemplary embodiments, each enhanced storage controller 106, 126, and 146 may comprise a RAID storage controller operable to define, and manage access to, logical volumes comprised of portions of one or more physical storage devices and providing reliability and performance enhancements as defined by RAID storage management techniques. In some exemplary embodiments, each storage controller may comprise a host bus adapter (HBA) adapted to physically and electronically couple with its corresponding computing device.

In accordance with a virtual machine computing environment, each computing device 104, 124, and 144 comprises a hypervisor program (e.g., hypervisor 108 within computing device 104 and similar hypervisor programs (not shown) operating within computing device 124 and 144). As is generally known in the art of virtual machine computing environments, a hypervisor program provides an abstraction layer for the physical computing electronics of the computing device in which the hypervisor operates such that multiple virtual machines may operate as though they reside in a dedicated computing system while the hypervisor program effectuates sharing of the physical computing device and peripherals for each of the multiple virtual machines. As shown in FIG. 1, computing device 104 comprises three exemplary virtual machines -- virtual machine "A" 110.1, virtual machine "B" 110.2, and virtual machine "C" 110.3. Each such virtual machine communicates through hypervisor 108 to access physical computing resources of computing device 104 including, for example, enhanced storage controller 106 and its associated storage devices (not shown).

Those of ordinary skill in the art will readily recognize VMware® as exemplary of a typical, commercially available, virtual machine computing environment. In such a VMware® computing environment, VMMS 102 represents "VMware vCenter" - a program operable to manage configuration and status of virtual machines operating in a plurality of computing devices. Features and aspects hereof may be operable in a variety of similar virtual machine computing environments. Thus, VMware® is intended only as one exemplary VM computing environment in which features and aspects hereof may be advantageously employed. In some VMware® embodiments, the management system (VMMS 102) further comprises a plugin module 150 that communicates with each storage controller through the hypervisor of the corresponding computing device. In other words, in a VMware® exemplary embodiment, plugin module 150 in VMMS 102 (vCenter) is designed in accordance with VMware® specifications to communicate with hypervisor 108 which, in turn, communicates with storage controller 106 through standard defined application programming interfaces (API) also defined in the VMware® specifications. In other exemplary embodiments, other suitable communications channels, protocols, and APIs may be employed to communicatively couple the storage controller with the VMMS.

Enhanced storage controllers 106, 126, and 146 each provide high-performance cache memory management for improving performance as compared to accessing underlying physical storage devices (not shown). As is generally known in the storage arts, cache memory structures are utilized to provide improved performance as compared to accessing slower, persistent, nonvolatile storage devices such as rotating optical or magnetic disk drives. Data that is read from the persistent, nonvolatile storage device may be stored in cache memory of a storage controller such that subsequent read requests may be more rapidly completed by accessing the data in cache memory rather than the slower, persistent, nonvolatile storage device. In like manner, data associated with processing of write request by enhanced storage controllers 106, 126, and 146 may be stored in the cache memory of the corresponding storage controller thus allowing subsequent read requests to access the data from cache memory. In addition, the cache memory may be operated in a write back mode such that data written to the cache memory may be posted or flushed to the persistent, nonvolatile storage device at a later time thus allowing the storage controller to indicate immediate completion of a write request to the corresponding requesting virtual machine (110.1 through 110.3).

As noted above, virtual machines operating in a virtual machine computing environment may be dynamically created and destroyed as well as migrated from one computing device to another computing device (e.g., by the VMMS for purposes of load balancing etc.). Thus, enhanced storage controllers 106, 126, and 146 provide improved cache memory management to allow dynamic increases and decreases to the size of a portion of cache memory utilized by each virtual machine operating within the corresponding computing device (104, 124, and 144, respectively). In general, enhanced storage controller 106, 126, and 146 are operable to subdivide their respective cache memories into a plurality of segments of cache memory such that segments may be allocated and de-allocated among the various virtual machines operating in the corresponding computing device 104, 124, and 144, respectively, as needed based on desired levels of performance and/or based on the number of virtual machines operating in each computing device.

FIG. 2 is a block diagram depicting exemplary additional details of the structure of an enhanced storage controller such as storage controllers 104, 124, and 144 of FIG. 1. Each storage controller may comprise control logic 250 representing circuits and/or programmed instructions operable in appropriate processors of the storage controller to control operation of the storage controller. Control logic 250 may comprise generalized storage control logic 252 representing appropriate programmed instructions and/or custom circuits for controlling overall operation of the storage controller (e.g., logic for interfacing with attached host systems and attached storage devices and for performing appropriate operations to process I/O requests received from attached host systems directed to storage devices and/or logical volumes). Storage controller 106 through control logic 252 may present storage devices and/or logical volumes along with corresponding cache memory portions as raw devices accessed by corresponding virtual machines through the hypervisor of the corresponding computing devices. Thus in a VMware® virtual machine computing environment, additional overhead processing associated with VMFS may be avoided.

In accordance with features and aspects hereof, control logic 250 further comprises plugin module interface 202 and cache control logic 204. Further, each storage controller comprises cache memory 220 used for storing cached data associated with data stored on persistent, nonvolatile storage devices coupled with the controller. Plugin module interface 202 may comprise any suitable circuits and/or programmed instructions for interacting with a management program such as VMMS 102 of FIG. 1. In general, plugin module interface 202 may receive asynchronous information from VMMS 102 indicating changes to the configuration of the virtual machine computing environment. In addition, plugin module interface 202 may query VMMS 102 to request present configuration information regarding virtual machines operating on the computing device in which the storage controller is operating. In a VMWare® exemplary embodiment, interface 202 implements a defined API in accordacen with VMware® specification to exchange information with a corresponding plugin module within vCenter (i.e., plugin module 150 of VMMS 102). Cache memory 220 may be implemented utilizing any suitable memory circuits including, for example, dynamic random access memory (DRAM). Cache control logic 204 represents any suitable electronic circuits and/or programmed instructions (executed by a suitable processor) adapted to couple with plugin module interface 202 to receive configuration information regarding virtual machines operating on the corresponding computing device (as well as the virtual machine computing environment as a whole). Cache control logic 204 is further adapted to couple with cache memory 220 to manage allocation and de-allocation of segments of cache memory 220 to be associated with each of a plurality of virtual machines operating in the corresponding computing device. Those of ordinary skill in the art will readily recognize that elements of control logic 250 may be implemented as suitably designed custom electronic circuits, suitably programmed instructions stored in a suitable program memory (not shown) to be executed by an appropriate general or special purpose processor (not shown), or any combination of custom circuits and programmed instructions.

In operation, cache control logic 204 divides the capacity of cache memory 220 into a plurality of segments (208.1 through 208.5,210.1 through 210.3, and 212.1 through 212.6). Through its interaction with plugin module interface 202, cache control logic 204 may allocate any number of such segments for use by each virtual machine operating on the computing device. Thus, each virtual machine presently operating on the computing device has a portion of the capacity of cache memory 220 allocated for its use. Each portion may be allocated by cache control logic 204 as an ordered sequence of segments. For example, portion 206.1 may be associated with VM "A" 110.1 of FIG. 1, portion 206.2 may be associated with VM "B" 110.2 of FIG. 1, and portion 206.3 may be associated with VM "C" 110.3 of FIG. 1. Based on the present configuration and operational status of the computing device 104 in which storage controller 106 is operable, portion 206.1 has been allocated five segments (208.1 through 208.5). In like manner, portion 206.2 has been allocated three segments (210.1 through 210.3), and portion 206.3 presently has no segments allocated to it (e.g., the corresponding virtual machine presently has no need for caching to achieve its desired performance). Further, cache memory 220 comprises six presently un-allocated segments 212.1 through 212.6 based on the current configuration and operational status of computing device 104 in which storage controller 106 is operating. Those of ordinary skill in the art will readily recognize that any number of such segments may be allocated or un-allocated. Thus, the number of segments shown in each portion of FIG. 2 and shown as un-allocated are intended merely as representative of a possible present operating configuration. Further, the size of each segment may be determined as a matter of design choice based on current and/or anticipated performance goals of the virtual machines and the virtual machine computing environment as a whole.

Each portion may associate its presently allocated segments as a portion by any suitable data structure including, for example, singly or doubly linked list structures or other suitable metadata constructs to associate one or more segments as presently allocated to a corresponding portion (e.g., for use by a corresponding virtual machine). As noted above, and as well known in the storage arts, cache memory may be used in a write through mode in which all data written to the cache memory is immediately posted or flushed to corresponding persistent, nonvolatile storage devices, or may be operated in a write back mode in which data is immediately written to cache memory but posting or flushing to persistent storage is deferred until a later time when the storage controller has idle processing power. To improve the speed with which segments may be allocated and de-allocated for particular portions, each allocated segment may be designated for write back or write through operation. Segments that are designated for write through operation may be immediately de-allocated for re-allocation to another portion as desired to improve performance of the virtual machines operating in the computing device. By contrast, segments allocated to a portion and designated for write back use must first be flushed to corresponding persistent storage before being de-allocated for re-allocation and use by another virtual machine in another portion of cache memory 220. Thus, each segment as shown in FIG. 2 indicates whether it has been designated for write back operation (WB) or write through operation (WT). In one exemplary embodiment, segments for each portion are allocated as a sequence of segments as shown in FIG. 2 (e.g., reference numerals designating a sequence such as 208 .1 through 208.5). Thus, such a sequence of segments comprises at least a last segment of the sequence. For example, in portion 206.1, segment 208.5 represents such a last segment while in portion 206.2, segment 210.3 represents such a last segment. In some exemplary embodiments, the last segment may be always designated for write through use so that the last segment of any portion may be immediately de-allocated for purposes of re-allocating the segment for use in another portion and its corresponding virtual machine. As discussed in further detail herein below, when such a write through last segment is de-allocated, the new last segment (i.e., the next to last segment of the present sequence of segments) is converted from write back use to write through use. Attendant with such a conversion, storage controller 106 (e.g., by operation of cache control logic 204) flushes any data from the write back cache memory segment to the corresponding locations of persistent, nonvolatile storage. Having completed the flushing or posting of such "dirty" data, the new last segment may be designated for write through use rendering it available for rapid de-allocation and re-allocation among the various portions.

Those of ordinary skill in the art will readily recognize numerous additional and equivalent elements that may be present in fully functional virtual machine computing environments such as system 100 of FIG. 1 and storage controller 106 of FIG. 2. Such additional and equivalent elements are omitted herein for simplicity and brevity of this discussion.

FIGS. 3 through 8 are flowcharts describing exemplary methods of operation for an enhanced storage controller such as storage controller 106 of FIGS. 1 and 2. In particular, the methods of FIGS. 3 through 8 are operable in a cache control logic element such as cache control logic 204 of enhanced storage controller 106 of FIG. 2. Step 300 of FIG. 3 receives initial configuration information from a virtual machine management system. The initial configuration information comprises information regarding virtual machines initially operable on the computing device in which the enhanced controller is operable. Such configuration information may comprise, for example, the number of virtual machines initially configured to operate on the computing device. As discussed further herein below, initial configuration information may also include a minimum cache portion size to be allocated to each of these initially operating virtual machines. Such a minimum cache portion size may be used by the cache control logic to assure that the portion-allocated to each virtual machine never falls below the specified minimum. Other configuration information may comprise performance threshold information indicating threshold performance metrics for each virtual machine operable on the computing device. For example, performance metric threshold configuration information may include information such as I/O request processing rate for each VM, desired user response time for each VM, and a ratio of small I/O requests versus large I/O requests processed by each VM. Those of ordinary skill in the art will readily recognize other configuration information that may be obtained from a virtual machine management system to identify desired performance characteristics of each virtual machine as well as performance of the computing device as a whole or the virtual machine computing environment as a whole. At step 302, the enhanced storage controller logically subdivides the capacity of the cache memory into a plurality of segments of cache memory. As noted above, the size of the segments may be determined as a matter of design choice as appropriate for the particular application. Further, the segments may vary in size to permit allocation of varying sizes of segments as may be appropriate for the particular application. Each segment of the plurality of segments is initially un-allocated (e.g., free to be allocated to any of the virtual machines by operation of the enhanced storage controller). Step 304 allocates a portion of the plurality of segments for each virtual machine operating on this computing device based on the initial configuration information. For example, each virtual machine may receive an equal allocation as its portion of the capacity of cache memory. In other embodiments, the configuration information may indicate a specific allocation to be provided to each of the virtual machines. Still further, as noted above, a minimum allocation may be specified for each of the virtual machines by the initial configuration information. Thus, the initial allocation of a portion of the plurality of segments for each virtual machine virtual machine may be based on the number of virtual machines initially operating or may be based on other criteria derived from the initial configuration information. In some embodiments, a virtual machine may receive no allocation of segments as its initial portion of cache memory (e.g., the minimum allocation for a virtual machine could be zero).

As the storage controller commences normal operation (processing I/O requests on behalf of each of the virtual machines operating in the computing device), the storage controller may receive (at step 306) updated configuration information from the virtual machine management system. The updated information may indicate, for example, a change in the number of virtual machines presently operating on this computing device. Further, the updated configuration information may indicate a change in desired performance metric threshold configuration information. As virtual machines are created or terminated (or moved/migrated between computing devices), updated configuration information may reflect appropriate changes in the number of virtual machines presently operating and/or changes in the desired performance characteristics of the various virtual machines presently operating. In some embodiments, the storage controller may periodically query the virtual machine management system to obtain such updated configuration information. In other exemplary embodiments, the virtual machine management system may asynchronously provide (e.g., push) such information to the storage controller as configuration of the virtual machine computing environment changes. As noted above, a plugin module within the enhanced storage controller may receive such information from the virtual machine management system. In the context of a VMware® implementation of the virtual machine computing environment, the plugin module may interact with the vCenter component of the VMware® environment to obtain such updated configuration information. Based on the updated configuration information, step 308 adjusts the number of segments allocated to the portion of cache memory for one or more virtual machines presently operating on the computing device. For example, if a virtual machine has been terminated or migrated to another computing device, the portion of cache memory segments allocated to that virtual machine may be de-allocated and thus freed for re-allocation to other virtual machines on this computing device. Or, for example, if performance metric threshold configuration information is changed or if a present measurement of a performance metric of an operating virtual machine changes, cache memory segments may be allocated or de-allocated among the various virtual machines operating on this computing device.

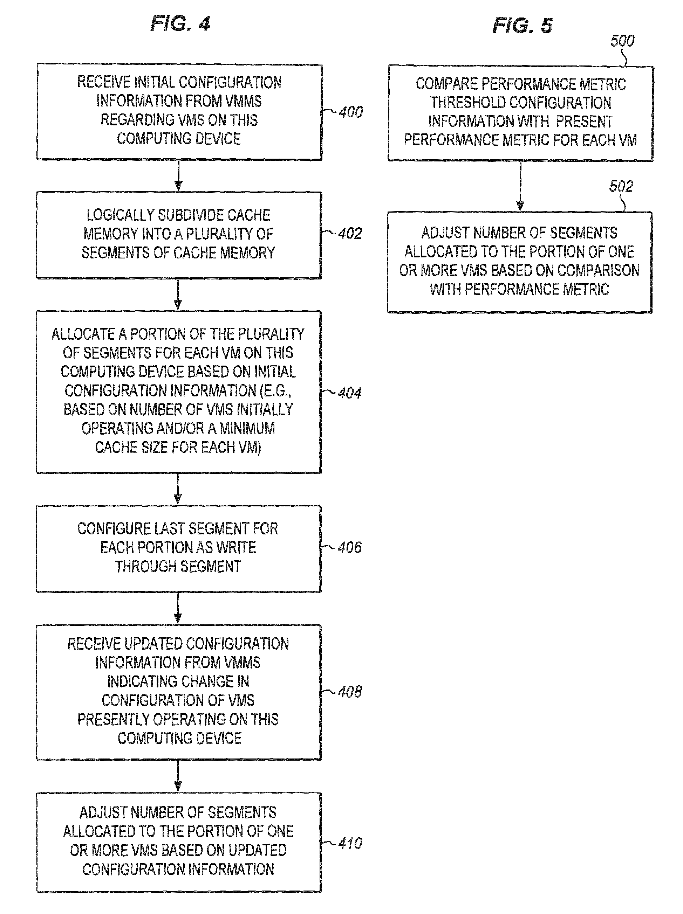

As noted above, cache memory may be used in a write through mode or in a write back mode. FIGS> 4 through 8 present variations of the method of FIG. 3 to enable use of cache memory segments in either write back or write through modes. FIG. 4 is a flowchart describing another exemplary method in accordance with features and aspects hereof to dynamically adjust the allocation of segments of cache memory apportioned to each of multiple virtual machines operating on a computing device. As above, the method of FIG. 4 is operable on enhanced storage controller such as storage controller 106 of FIGS. 1 and 2. Steps 400 through 404 are operable in a manner analogous to step 300 through 304 described above with respect to FIG. 3. In general, initial configuration information is received from the virtual machine management system. Based on the initial configuration information, the capacity of cache memory is logically subdivided into a plurality of segments and apportioned to each of the virtual machines initially operating on this computing device. The initial allocation may be based on a specified minimum cache size for each VM and/or may be based on the number of virtual machines initially operating on this computing device.

Following such an initial allocation, step 406 configures a last segment for each portion as for use as a write through cache segment. As noted above, in some exemplary embodiments, the cache segments may be preferably utilized in a write back cache mode by the storage controller on behalf of the corresponding virtual machine. To improve the speed with which segments may be allocated or de-allocated, the last segment of the sequence of segments allocated as a portion of cache memory for a virtual machine is designated/configured for use as a write through cache segment. Such a last segment configured for use as a write through cache segment may be immediately de-allocated for re-allocation to another portion for another virtual machine operating on the computing device. Segments in the sequence of a portion other than the last segment may be configured for use as write back cache segments. As noted, de-allocation and re-allocation of a write back cache segment requires additional processing by the storage controller to assure that any "dirty" data within the cache segment to be de-allocated is first flushed or posted to persistent storage on the storage devices controlled by the storage controller.

Steps 408 and 410 are then operable in a manner analogous to steps 306 and 308 of FIG. 3. At step 408, the enhanced storage controller receives updated configuration information from the virtual machine management system indicating some change in the virtual machines presently operating in this computing device. Step 410 adjusts the number of segments allocated to a portion of one or more virtual machines based on the updated configuration information received from the virtual machine virtual machine management system.

FIG. 5 is a flowchart presenting exemplary additional details of operation of an enhanced storage controller such as storage controller 106 of FIGS. 1 and 2. The method of FIG. 5 may be periodically operable within the enhanced storage controller to detect changes in the performance metrics for one or more virtual machines and to adjust allocation of segments among the various portions for each virtual machine based on the desired performance. Step 500 compares performance metric threshold configuration information associated with each virtual machine with a corresponding present performance metric as measured within the storage controller. Based on the comparison, step 502 may adjust the number of segments allocated to a portion of one or more virtual machines. For example, if one virtual machine has a performance metric measurement falling below the corresponding desired performance metric threshold value, the portion of cache memory associated with that virtual machine may require allocation of one or more additional segments of cache memory. Or, for example, depending on the particular performance metric being measured, exceeding a threshold may indicate a reason to decrease the number of segments allocated to a particular virtual machine. Where additional segments are required, presently un-allocated segments may be utilized if available. If no presently un-allocated segments are available, one or more segments presently allocated to other virtual machines may be de-allocated and then re-allocated to the portion for the virtual machine that requires additional cache memory segments to meet its desired performance metric threshold.

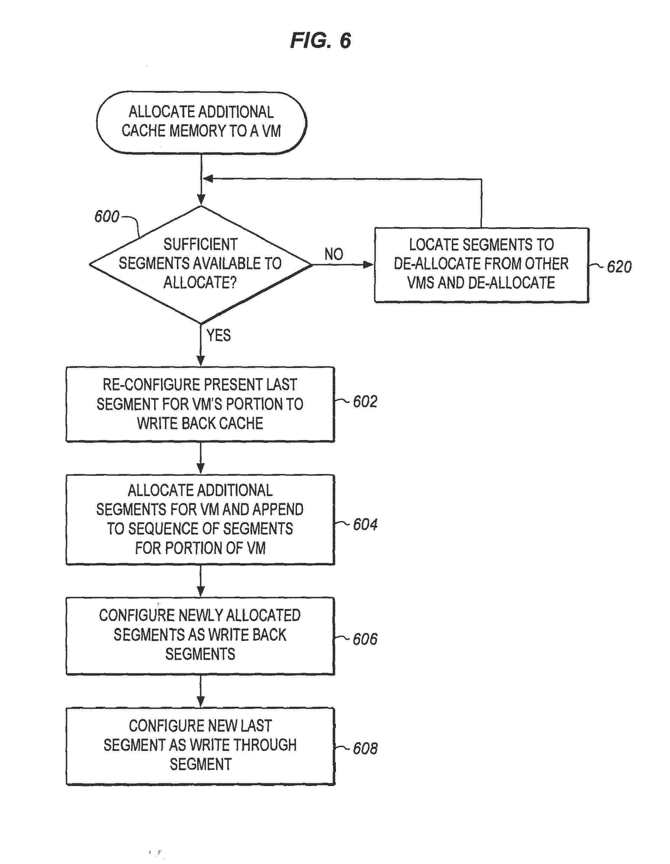

FIG. 6 is a flowchart describing exemplary additional details for processing within an enhanced storage controller (such as enhanced storage controller 106 of FIGS. 1 and 2) to allocate additional cache memory segments to a particular virtual machine. At step 600, the storage controller determines whether sufficient segments are available to be allocated from a pool of presently un-allocated cache memory segments. If not, step 620 is operable to locate one or more segments presently allocated to the portions of other virtual machines that may be de-allocated to allow re-allocation to the virtual machine requiring additional cache segments. Having so located additional cache segments to be de-allocated, step 620 also de-allocates the identified segments from other virtual machines rendering them presently un-allocated thus allowing them to be re-allocated to the virtual machine requiring additional segments. Processing then loops back to step 600 to determine whether sufficient segments are now available to re-allocate.

When sufficient available segments have been located and de-allocated (by operation of step 620), step 602 reconfigures the present last segment for the virtual machine's portion to utilize write back cache mode. Since the last segment was previously configured to utilize write through cache mode, no data needs to be posted or flushed. Rather, the cache segment may simply be reconfigured for utilization in a write back mode. Step 604 next allocates one or more additional segments (from the newly de-allocated/freed segments) for the virtual machine and appends the newly allocated segments to the sequence of segments allocated to the portion of cache memory for the virtual machine requiring additional cache segments. Step 606 then configures the newly allocated segments for use as write back cache segments and step 608 configures the new last segment of the sequence of segments in the portion as a write through segment so that it may also be rapidly de-allocated later if need be.

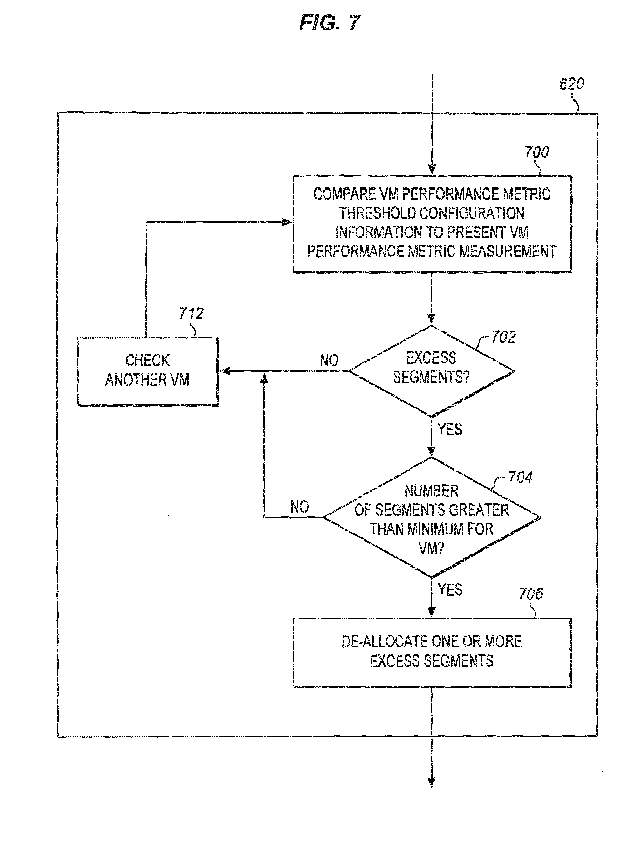

FIG. 7 is a flowchart describing exemplary additional details of the processing of step 620 of FIG. 6 to locate segments from other virtual machines that may be de-allocated to render them available for re-allocation to a virtual machine requiring additional segments. The method of FIG. 7 iterates through the cache memory portions of the virtual machines presently operating on the computing device to locate segments that may be de-allocated based on the current configuration of virtual machines on the computing device and/or based on the current performance of the various virtual machines. For the first virtual machine to be considered, step 700 compares one or more performance metric threshold values to corresponding present performance metric measurements. Based on the performance metric comparison step 702 determines whether the virtual machine presently has excessive segments allocated to its portion of cache memory that may be de-allocated. If not, step 712 prepares to check another virtual machine presently operating on the computing device and processing continues looping back to step 700 to perform further performance metric comparisons. If step 702 determines that the virtual machine has excessive segments presently allocated to its portion based on the performance measurement comparison, step 704 next determines whether the number of segments presently allocated to this virtual machine exceeds the minimum allocation configured for this virtual machine. If not, step 712 is operable (as above) to prepare to check a next virtual machine and processing continues looping back to step 700. Otherwise, this virtual machine has excessive segments allocated to its portion of cache memory and step 706 de-allocates one or more of the excess segments thereby freeing them for re-allocation to other virtual machines.

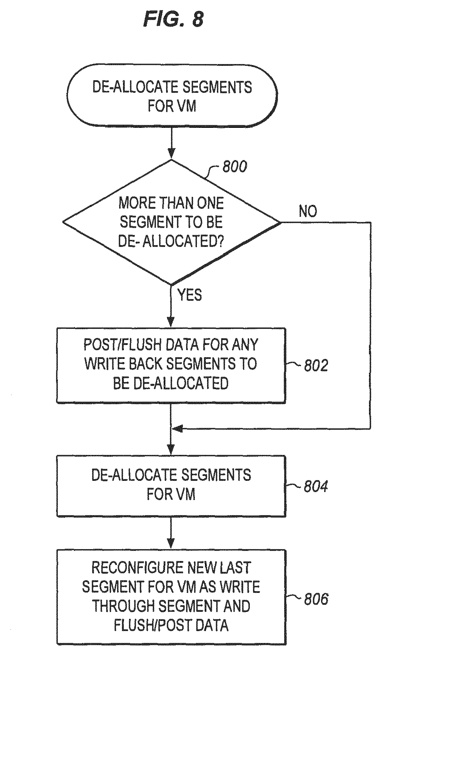

FIG. 8 is a flowchart describing exemplary additional details of the processing required to de-allocate one or more segments presently allocated to the portion of cache memory associated with a particular virtual machine. The processing of FIG. 8 may be invoked as described above with respect to step 706 of FIG. 7 or may be invoked in other conditions where segments may be de-allocated such as termination or removal of the virtual machine from the computing device. Step 800 determines whether the de-allocation is attempting to de-allocate more than a single segment presently allocated to the virtual machine. If not, processing continues at step 804 as discussed below. If so, step 802 posts or flushes any "dirty" data stored within segments to be de-allocated that are presently configured for write back use. Step 804 then de-allocates one or more segments from the portion of cache memory associated with this virtual machine. Step 806 reconfigures the new last segment of the sequence of segments (if any) for use as a write through cache segment. If the segment was previously configured for write back cache operations, step 806 also assures that any "dirty" data presently stored in the new last segment is first flushed or posted to the persistent storage devices coupled with the storage controller.

Those of ordinary skill in the art will readily recognize numerous additional and equivalent steps that may be present in fully functional methods such as the methods described above with inspectors FIGS. 3 through 8. Such additional and equivalent steps are omitted here and for simplicity and brevity of this discussion

While the invention has been illustrated and described in the drawings and foregoing description, such illustration and description is to be considered as exemplary and not restrictive in character. One embodiment of the invention and minor variants thereof have been shown and described. In particular, features shown and described as exemplary software or firmware embodiments may be equivalently implemented as customized logic circuits and vice versa. Protection is desired for all changes and modifications that come within the spirit of the invention. Those skilled in the art will appreciate variations of the above-described embodiments that fall within the scope of the invention. As a result, the invention is not limited to the specific examples and illustrations discussed above, but only by the following claims and their equivalents.

## Claims

1. A storage controller (106) adapted to couple with a computing device (104) operating in a virtual machine (VM) computing environment (100) wherein the VM computing environment provides for operation of multiple VMs (110) on the computing device and wherein the VM computing environment comprises a VM management system (VMMS) (102) coupled with the computing device, the storage controller comprising:
a cache memory (220) accessible to any of the VMs wherein the cache memory is logically subdivided into a plurality of segments (208, 210, 212); and
cache control logic (204) coupled with the cache memory and communicatively coupled with the VMMS, wherein the cache control logic is adapted to controllably allocate and de-allocate a portion (206) of the plurality of segments for use by each virtual machine presently operating on the computing device based on the configuration information received from the VMMS wherein each portion comprises a number of segments based on the configuration information.

2. The system of claim 1
wherein said configuration information regarding each VM further comprises a minimum size of the portion required by said each VM, and
wherein the cache control logic is further adapted to assure that a size of the portion-allocated to said each VM is at least as large as the minimum size for said each VM.

3. The system of claim 1
wherein the configuration information comprises performance metric threshold configuration information for said each VM, the performance metric threshold configuration information comprising one or more of:
I/O request processing rate for said each VM,
user response time for said each VM, and
a ratio of small I/O requests versus large I/O requests processed by said each VM,
wherein the cache control logic allocates and de-allocates segments of the portion for said each VM based on a comparison of a present performance metric of said each VM with the performance metric threshold configuration information of said each VM.

4. The system of claim 1
wherein the cache control logic is further adapted to allocate each portion for said each VM as an ordered sequence of one or more segments wherein the ordered sequence comprises at least a last segment.

5. The system of claim 4
wherein the cache control logic configures use of the last segment of the portion of said each VM as a write through cache memory segment.

6. The system of claim 5
wherein the cache control logic is further adapted to determine that a first VM requires allocation of an additional segment of cache memory,
wherein the cache control logic is further adapted to de-allocate the last segment presently allocated to another VM and is further adapted to allocate the de-allocated segment to the first VM.

7. The system of claim 4
wherein the ordered sequence of segments allocated to a VM comprises a plurality of segments including the last segment,
wherein the cache control logic configures use of all segments of the sequence other than the last segment as write back cache memory segments and configures use of the last segment as a write through cache memory segment.

8. A method operable in a storage controller (106), the storage controller adapted to communicatively couple with each of one or more virtual machines (VMs) (110) operating on a computing device in a VM computing environment (100), the method comprising:
logically dividing a cache memory of the storage controller into a plurality of segments;
allocating a portion of the plurality of segments for each of the VMs initially operating on the computing device wherein the portion comprises a number of segments determined based on a number of VMs initially operating on the computing device;
receiving configuration information from the VMMS wherein the configuration information comprises changes in the number of VMs presently operating on the computing device; and
adjusting the number of segments allocated in the portion associated with one or more VMs in response to receiving the configuration information.

9. The method of claim 8
wherein the configuration information further comprises a minimum size of the portion for each VM presently operating on the computing device,
wherein the step of allocating further comprises allocating the portion wherein the number of segments in the portion is no less than the minimum size for each VM presently operating on the computing device, and
wherein the step of allocating further comprises allocating the portion wherein the size of the portion is at least the minimum size for each VM presently operating on the computing device, and
wherein the step of adjusting further comprises adjusting the number of segments in the size of the portion is at least the minimum size for each VM presently operating on the computing device.

10. The method of claim 8
wherein the configuration information comprises performance metric threshold configuration information for said each VM, the performance metric threshold configuration information comprising one or more of:
I/O request processing rate for said each VM,
user response time for said each VM, and
a ratio of small I/O requests versus large I/O requests processed by said each VM,
wherein the step of adjusting further comprises:
comparing a present performance metric of said each VM with performance metric threshold configuration information-allocates and de-allocates segments of the portion for said each VM based on a comparison of a present performance metric of said each VM with the performance metric threshold configuration information of said each VM.

11. The method of claim 8
wherein the step of allocating further comprises allocating the portion for said each VM as an ordered sequence of one or more segments wherein the ordered sequence comprises at least a last segment.

12. The method of claim 11
wherein the step of allocating further comprises configuring use of the last segment of the portion of said each VM as a write through cache memory segment.

13. The method of claim 12
wherein the step of adjusting further comprises:
determining that a first VM requires allocation of an additional segment of cache memory;
de-allocating the last segment presently allocated to another VM; and
allocating the de-allocated segment to the first VM.

14. The method of claim 11
wherein the ordered sequence of segments allocated to a VM comprises a plurality of segments including the last segment,
wherein the step of allocating further comprises:
configuring use of all segments of the sequence other than the last segment as write back cache memory segments; and
configuring use of the last segment as a write through cache memory segment.

15. The method of claim 8
wherein the received configuration information comprises information from the VMMS indicating removal of an identified VM from the computing device, and
wherein the step of adjusting further comprises de-allocating all segments presently allocated to the identified VM responsive to receipt of the information.
